# EUROPÄISCHE PATENTSCHRIFT

(11) **EP 1 291 097 B1**
(45) Veröffentlichungstag und Bekanntmachung des Hinweises auf die Patenterteilung: **07.06.2006**
(21) Anmeldenummer: 02020226.3
(22) Anmeldetag: 10.09.2002
(51) Int. Cl.: B22C 19/04, G01N 15/08

(54) **Verfahren und Vorrichtung zum Bestimmen des Gasdurchlässigkeitsvermögen von insbesondere aus Sand bestehenden Kernen**
Method and device for the determination of gas permeabilty of sand cores in particular
Procédé et dispositif pour déterminer la perméabilité au gaz, notamment des noyaux de sable

(30) Priorität: 10.09.2001 DE 10144392
(43) Veröffentlichungstag der Anmeldung: 12.03.2003
(73) Patentinhaber: Hydro Aluminium Deutschland GmbH, 51149 Köln (DE)
(72) Erfinder: Bender, Wilfried, Dr., 50674 Köln (DE)
(74) Vertreter: Cohausz & Florack

(56) Entgegenhaltungen:
- EP-A- 0 660 111
- DE-A- 4 424 443
- US-A- 2 371 508

## Beschreibung

Die Erfindung betrifft ein Verfahren und eine Vorrichtung zum Bestimmen des Gasdurchlässigkeitsvermögens von für das Vergießen von Metallschmelzen, insbesondere Leichtmetallschmelzen, bestimmten Kernen.

Bei der gießtechnischen Herstellung von komplex geformten Bauteilen, beispielsweise Motorblöcken oder Zylinderköpfen, werden zur Erzeugung von Hohlräumen und anderen Formelementen Gießkerne genutzt. Die Gießkerne weisen dabei sogenannte "Kernmarken" auf, an denen sie in der jeweiligen Gießform gehalten werden.

Kerne der voranstehend erwähnten Art sind in der Regel aus harzgebundenen Formsanden gefertigt, um die für ihre Handhabung bei der Vorbereitung und Einrichtung der Gießform notwendige Formstabilität zu sichern. Beim Eingießen von Metallschmelze beginnt infolge des durch den direkten Kontakt mit der heißen Metallschmelze ausgelösten Temperaturanstiegs die Zersetzung der Kerne. Gleichzeitig weisen die Kerne eine gewisse Feuchtigkeit auf. Dadurch entstehen infolge der Erhitzung bei Kontakt mit der Schmelze Gase und Dämpfe, die über die Kernmarken abgeführt werden müssen. Andernfalls besteht die Gefahr, daß im fertig abgegossenen Bauteil Hohlräume oder Oberflächenfehler vorhanden sind, die durch nicht entwichene Gas- bzw. Dampfreste verursacht werden.

In der Praxis erweist es sich vielfach als schwierig, die sichere Ableitung der infolge der Kernzersetzung entstehenden Gase aus den Kernen über die Kernmarken ausreichend schnell und vollständig zu gewährleisten. Es ist daher versucht worden, das Gasdurchlässigkeitsvermögen von Gießkernen meßtechnisch zu bestimmen und um eine potentielle Fehlerentstehung im Gußteil frühzeitig abschätzen zu können.

Gemäß einem aus der Praxis bekannten Verfahren wird dazu bei Raumtemperatur eine Sandkernprobe in eine Meßzelle gesetzt. Dann wird ein Gasstrom durch die Meßzelle geleitet. Dabei wird der an der Einströmöffnung der Meßzelle anstehende Eingangsdruck und der am Ausgang der Meßzelle noch vorhandene Ausgangsdruck erfaßt und die Druckdifferenz als Maß für die Durchlässigkeit der Sandprobe ermittelt. Als weiterer Indikator für die Permeabilität der Sandprobe wird die Durchflußmenge des aus der Meßzelle abströmenden Gases erfaßt.

Das bekannte Verfahren ergibt eine starke Abhängigkeit der Durchlässigkeit der Sandkerne von der Dichte der Sandpackung. Für das Verhalten beim Abguß ist aber nicht nur der eingesetzte Sand entscheidend, sondern auch der Binder. Die Dämpfe, die durch den Zerfall des Binders beim Abguß erzeugt werden und die daraus folgende Kondensation in kühleren Kernbereichen, entscheiden mit, ob der Kern seine Gasdurchlässigkeit behält oder aufgrund der Entstehung einer Kondensatbarriere an Durchlässigkeit einbüßt. Eine zu geringe Gasdurchlässigkeit führt zu Fehlern im fertigen Gußstück.

Die Aufgabe der Erfindung besteht darin, ein Verfahren zu schaffen, welches die realitätsgetreue Bestimmung des Gasdurchlässigkeitsvermögens von Kernen ermöglicht, die aus einem porösen Material, insbesondere Formsand, bestehen. Ebenso soll eine Vorrichtung geschaffen werden, welche sich zur Durchführung dieses Verfahrens eignet.

Ausgehend von dem voranstehend erläuterten Stand der Technik wird diese Aufgabe einerseits durch ein Verfahren zum Bestimmen des Gasdurchlässigkeitsvermögens von für das Vergießen von Metallschmelzen, insbesondere Leichtmetallen, bestimmten Kernen, die aus einem porösen Material, insbesondere Sand, hergestellt sind, gelöst, bei dem eine Kernprobe in einem Erwärmungsabschnitt auf eine Erwärmungstemperatur aufgeheizt wird, bei dem die Kernprobe in einem anderen Kühlabschnitt auf eine Kühltemperatur abgekühlt wird und bei dem der aus dem Kühlabschnitt über ein bestimmtes Zeitintervall austretende Gas- oder Dampfstrom erfaßt wird.

Die voranstehend genannte Aufgabe wird andererseits durch eine zur Durchführung eines erfindungsgemäßen Verfahrens geeignete Vorrichtung gelöst, die mit einem Probengefäß für eine Sandkernprobe, mit einer Kühleinrichtung zum Abkühlen eines Kühlabschnitts der in dem Probengefäß jeweils enthaltenen Sandkernprobe, mit einer Wärmequelle zum Erwärmen eines Erwärmungsabschnitts der in dem Probengefäß jeweils enthaltenen Sandkernprobe, und mit einer Meßeinrichtung zum Erfassen eines aus dem Kühlabschnitt austretenden Gas-/Dampfvolumenstroms ausgestattet ist.

Gemäß der Erfindung wird eine vorzugsweise nur über zwei entgegengesetzte Enden gasdurchlässige Kernprobe hergestellt. Diese Kernprobe wird in einem Abschnitt erwärmt und in einem nachfolgenden Abschnitt auf eine Kühltemperatur abgekühlt. Der hinter dem gekühlten Abschnitt über ein bestimmtes Zeitintervall austretende Gas- oder Dampfstrom wird dabei vor, während und nach der Erhitzung, insbesondere in Abhängigkeit vom vor dem Erwärmungsabschnitt angelegten und voreingestellten Gasdruck, erfaßt. Auf diese Weise wird zur Prüfung seiner Durchlässigkeit der jeweils untersuchte Sandkern einer Temperaturbelastung ausgesetzt, die seiner Erwärmung im Gießbetrieb entspricht. So läßt sich nicht nur der Einfluß der Packungsdichte des Kernsands, sondern auch der Einfluß erfassen, den die im Gießbetrieb auftretende thermische Belastung auf die Durchlässigkeit des Gießkerns hat. Dabei wird der Sandkern an einer Stelle thermisch so belastet, als wenn er in Kontakt mit der Schmelze beim Herstellen eines Gußteils stünde. Eine andere Stelle des Kerns wird demgegenüber so gekühlt, daß die Temperaturverhältnisse zwischen der Schmelzenkontaktzone und den außenliegenden Bereichen des Kerns im Gießbetrieb nachgebildet werden.

Insbesondere wird bei erfindungsgemäßer Vorgehensweise der Einfluß der sich infolge des Temperaturabfalls von der warmen zur kalten Zone des Sandkerns einstellenden Kondensatbildung berücksichtigt. So ist festgestellt worden, daß gerade dieses Kondensat bei Sandkernen der in Rede stehenden Art zu einer erheblichen Beeinträchtigung der Permeabilität bis hin zum Verstopfen der Poren führen kann. Das erfindungsgemäße Verfahren bietet nun die Möglichkeit, den thermischen Einfluß auf die Gasdurchlässigkeit zu bestimmen.

Das erfindungsgemäße Verfahren ermöglicht es dabei auf einfache Weise, die zeitliche Veränderung der Gasdurchlässigkeit eines Gießkerns zu bestimmen. Ebenso kann mit Hilfe der bei erfindungsgemäßer Vorgehensweise ermittelten Meßdaten das im Gießprozeß von dem Gießkern emittierte Gas- / Dampfvolumen auf einfache, realitätsgetreue Weise bestimmt werden.

So ist es möglich, ein praxisgerechtes Abbild der mit zunehmender Betriebsdauer abnehmenden Durchlässigkeit von Sandkernen zu ermitteln, indem beispielsweise ein unter einem bestimmten Eingangsdruck stehender Gasstrom in den Erwärmungsabschnitt eingeleitet und der Ausgangsdruck des aus dem Kühlabschnitt austretenden Gasstroms über ein bestimmtes Zeitintervall erfaßt wird.

Die bei Erwärmung des Sandkerns infolge der Zerfallsprozesse aus dem Gaskern austretende Gas-/Dampfmengen können demgegenüber erfaßt werden, indem der Erwärmungsabschnitt ohne eine gesonderte Gasdurchleitung erwärmt und das dabei freiwerdende Gas bzw. die dabei entstehenden Dämpfe volumenmäßig erfaßt werden.

Die Art der Kondensatbildung in Abhängigkeit vom Temperaturgradienten zwischen heißem und kaltem Bereich und deren Einfluß auf die Gasdurchlässigkeit können exakt geprüft werden. Dazu ist es günstig, wenn durch eine Isolierung des untersuchten Kerns radial zur Richtung zwischen Heiz- und Kühlzone keine Wärme, z.B. über die Seitenflächen, aufgenommen oder abgegeben wird. So läßt sich bei erfindungsgemäßer Vorgehensweise die Lage der Kondensationszone zwischen dem warmen und dem kalten Abschnitt der Sandkernprobe bestimmen.

Um eine gezielte, exakte Regelung der Aufheizung des Erwärmungsabschnitts durchführen zu können, kann als Wärmequelle für die Aufheizung des Erwärmungsabschnitts eine hinsichtlich der von ihr abgegebenen Wärmemenge steuerbare Heizeinrichtung verwendet werden. Eine solche Heizeinrichtung ermöglicht auf einfache Weise eine Durchführung verschiedenster Heizzyklen oder die Einstellung unterschiedlicher Erwärmungstemperaturen, so daß sich die Abhängigkeit der Gasdurchlässigkeit des Sandkerns von der Aufheiztemperatur leicht bestimmen läßt.

Gemäß einer alternativen bzw. ergänzenden Ausgestaltung des erfindungsgemäßen Verfahrens kann ein besonders realitätsgetreues Abbild der Durchlässigkeit eines Sandkerns ermittelt werden, indem als Wärmequelle für die Aufheizung des Erwärmungsabschnitts ein Metallschmelzenbad verwendet wird. Indem ein solches das Metallschmelzenbad in direkten Kontakt mit mindestens einer der Flächen des Erwärmungsabschnitts gebracht wird, lassen sich auch im Labor Versuchsbedingungen herstellen, die den im praktischen Gießbetrieb gegebenen Bedingungen exakt entsprechen.

Besonders geeignet zur Durchführung des erfindungsgemäßen Verfahrens sind Proben, deren Form an die Form der die Gießmarken bildenden Abschnitte der Sandkerne angepaßt ist. Dies ist beispielsweise dann der Fall, wenn die Sandkernprobe eine längliche Form aufweist. Eine längliche Probenform hat den zusätzlichen Vorteil, daß sie leicht in eine Erwärmungs- und eine Abkühlzone unterteilt werden kann. Abhängig von der Form der in der Praxis eingesetzten Sandkerne kann dazu die Sandkernprobe beispielsweise zylindrisch, kegelstumpf- oder pyramidenstumpfförmig ausgebildet sein, wobei der Erwärmungsabschnitt der einen Stirnseite und der Kühlabschnitt der anderen Stirnseite der jeweiligen Sandkernprobe zugeordnet wird.

Eine hinsichtlich der praktischen Durchführung des erfindungsgemäßen Verfahrens besonders günstige Ausgestaltung der Erfindung ist in diesem Zusammenhang dadurch gekennzeichnet, daß mindestens die Seitenflächen der Probe abgedichtet werden und daß der aus der dem Kühlabschnitt zugeordneten Stirnfläche austretende Gasvolumenstrom erfaßt wird.

Gemäß einer weiteren bevorzugten Ausgestaltung der Erfindung wird die Kernprobe direkt in ein Probengefäß eingeschossen, in dem sie während ihrer Untersuchung verbleibt. Auf diese Weise kann eine direkte Berührung der Kernprobe mit der Haut des Probennehmers vermieden werden. Zudem sind gesonderte Maßnahmen zum Abdichten beispielsweise der Seitenflächen der Probe nicht erforderlich.

Weitere vorteilhafte Ausgestaltungen der Erfindung sind in den abhängigen Ansprüchen angegeben und werden nachfolgend anhand einer ein Ausführungsbeispiel darstellenden Zeichnung näher erläutert. Es zeigen schematisch:
- Fig. 1: eine Vorrichtung zur Ermittlung der Gasdurchlässigkeit einer Sandkernprobe im Längsschnitt,
- Fig. 2: eine andere Vorrichtung zur Ermittlung der Gasdurchlässigkeit einer Sandkernprobe im Längsschnitt.

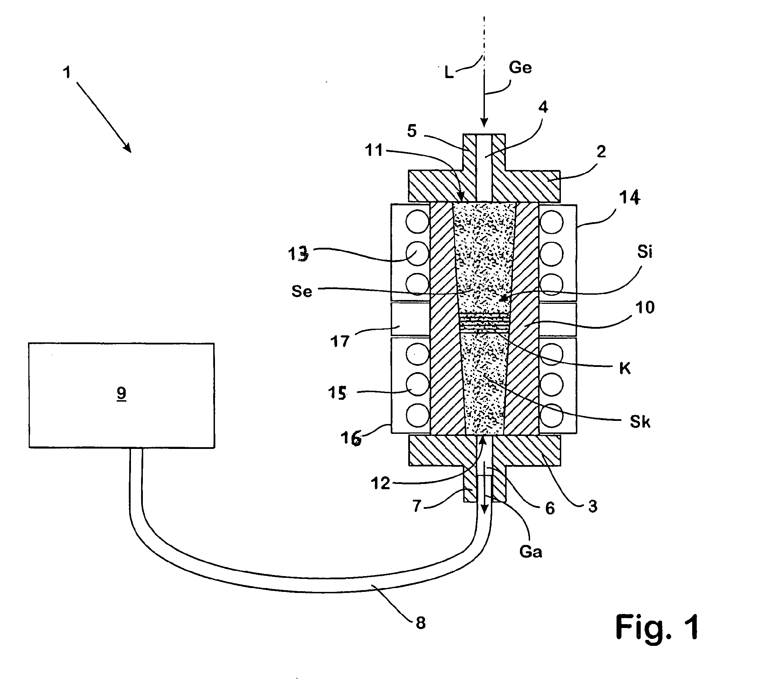

Bei der in Figur 1 dargestellten Vorrichtung 1 zur Ermittlung der Gasdurchlässigkeit einer kegelstumpfförmigen Sandkernprobe S besteht die Möglichkeit, einen Teil der Sandkernprobe S zu kühlen und einen anderen zu heizen, so daß ein realitätsnaher Temperaturgradient erzeugt werden kann. Dazu weist die Vorrichtung 1 einen tellerförmigen oberen Halter 2 und einen ebenso geformten unteren Halter 3 auf. In den Halter 2 ist eine koaxial zu dessen Längsachse L verlaufende Zuströmöffnung 4 eingeformt. Über einen an der vom unteren Halter 3 abgewandten Seite des oberen Halters 2 angeformten Anschlußflansch 5 kann eine Gaszuführung an den Halter 2 angeschlossen werden. In gleicher Weise ist in den unteren Halter 3 eine Ausströmöffnung 6 eingeformt, die in einen auf der vom oberen Halter 2 abgewandten Seite ausgebildeten Anschlußflansch 7 mündet. An den Anschlußflansch 7 ist eine Verbindungsleitung 8 angeschlossen, die in eine Meßeinrichtung 9 geführt ist.

Zwischen den Haltern 2,3 ist ein aus einem wärmeleitfähigem Material gebildetes, hülsenförmiges Probengefäß 10 gehalten. Der mit dem Sandkern S gefüllte Innenraum des Probengefäßes 10 weist eine ausgehend von einer in der dem oberen Halter 2 zugeordneten Stirnfläche ausgebildeten Eintrittsöffnung 11 zu der in der dem unteren Halter 3 zugeordneten Stirnfläche ausgebildeten Austrittsöffnung 12 des Probengefäßes 10 konisch zulaufende Form auf. Durch die Form des Innenraums des Probengefäßes 10 ist so die insgesamt kegelstumpfförmige Form des Sandkerns S bestimmt.

Bei zwischen den Haltern 2,3 gehaltenem Probengefäß 10 ist das Probengefäß in seinem oberen, Abschnitt von Heizleitern 13 einer elektrischen, elektromagnetischen oder anderen hinsichtlich der abgegebenen Wärmeleistung regelbaren, als Wärmequelle für die Erwärmung der Sandkernprobe S dienenden Heizeinrichtung 14 umgeben. In gleicher Weise ist das Probengefäß 10 in einem unteren Abschnitt von Kühlschlangen 15 einer ebenfalls hinsichtlich ihrer Kühlleistung regelbaren Kühleinrichtung 16 umgeben. Der mittlere Abschnitt des Probengefäßes 10 kanndemgegenüber durch eine Isolierung 17 gegenüber der Umgebung so abgeschirmt sein, daß dieser Abschnitt nicht von von außen auf das Probengefäß 10 einwirkende Wärme- bzw. Kältequellen beeinflußt wird.

Zum Ermitteln der Gasdurchlässigkeit der Sandkernprobe S wird zunächst der Innenraum des Probengefäßes 10 mit harzgebundenem Formsand in gleicher Weise gefüllt. Die Packungsdichte des Sandes wird dabei so gewählt, wie es bei der praktischen Herstellung der Fall ist, so daß die Sandkernprobe S nach Füllung des Probengefäßes 10 ein Abbild eines in der Praxis verwendeten Gießkerns darstellt.

Anschließend wird das Probengefäß 10 zwischen die Halter 2,3 gesetzt. Die Halter 2,3 sitzen dabei dicht auf den Stirnflächen des Probengefäßes 10, so daß seine Durchströmung nur noch über die in den Haltern 2 bzw. 3 ausgebildeten Zuström- 4 bzw. Ausströmöffnungen 6 erfolgen kann.

Um die Temperaturbedingungen beim Vergießen von z.B. Leichtmetallschmelze zu simulieren, wird dann mittels der Heizeinrichtung 14 der obere Abschnitt der Sandkernprobe S auf ca. 700 °C aufgeheizt, so daß dort ein Erwärmungsabschnitt Se entsteht. Gleichzeitig wird das untere Drittel der Sandkernprobe S mittels der Kühleinrichtung 16 auf Raumtemperatur abgekühlt, so daß sich dort ein sich ebenfalls etwa über ein Drittel der Sandkernprobe S erstreckender Kühlabschnitt Sk bildet. Der zwischen den Erwärmungsabschnitt Se und dem Kühlabschnitt Sk vorhandene Abschnitt Si der Sandkernprobe S bleibt demgegenüber von direkter Einwirkung einer Wärme- bzw. Kältequelle ausgespart.

Nach einer ausreichenden Aufheiz- bzw. Abkühlzeit wird über die Zuströmöffnung 4 mit einem definierten Druck ein Gasstrom Ge in die Sandprobe S geleitet. Gleichzeitig wird von der Meßeinrichtung 9 aus der Sandkernprobe S über die Ausströmöffnung 6 austretendes Gas Ga abgezogen. Dabei wird die zeitliche Entwicklung des austretenden Gasstroms Ga von der Meßeinrichtung 9 erfaßt.

Mit Aufheizung des Sandkerns S setzt im Bereich der Erwärmungszone Se der Zerfall des im Sandkern S enthaltenen Binders ein. Die dabei entstehenden Gase und Dämpfe strömen mit dem in die Sandprobe S geleiteten Gasstrom Ge zur Ausströmöffnung 6 des Halters 3. Dabei kommt es beim Übergang zum Kühlabschnitt Sk zur Kondensation von in dieser Gasströmung aus dem Erwärmungsbereich Se hinaustransportierten Flüssigkeiten. Das dabei entstehende Kondensat sammelt sich im gegenüber der Umgebung isolierten Abschnitt Si der Sandprobe S und schlägt sich dort als Kondensatablagerungen K nieder. Die Lage der Kondensatablagerungen in der Sandkernprobe S hängt dabei von der sich infolge der Erwärmung des Erwärmungsabschnitts Se und der Abkühlung des Erwärmungsabschnitts Sk in der Sandkernprobe S einstellenden Temperaturverteilung ab.

Mit zunehmender Versuchsdauer werden die Poren der Sandkernprobe S im Abschnitt Si der Sandkernprobe S mehr und mehr durch die sich dort niederschlagenden Kondensatablagerungen K verstopft. Dies hat zur Folge, daß der aus der Ausströmöffnung 6 austretende Gasstrom Ga mit zunehmender Versuchsdauer ebenfalls abnimmt. Der von der Meßeinrichtung 9 erfaßte zeitliche Verlauf des aus der Sandkernprobe S austretenden Gasstroms Ga spiegelt somit die über einen Gießvorgang in der Praxis sich einstellende Veränderung des Gasdurchlässigkeitsvermögens eines Gießkerns wieder, der aus demselben Formsand geformt ist wie die Sandkernprobe S.

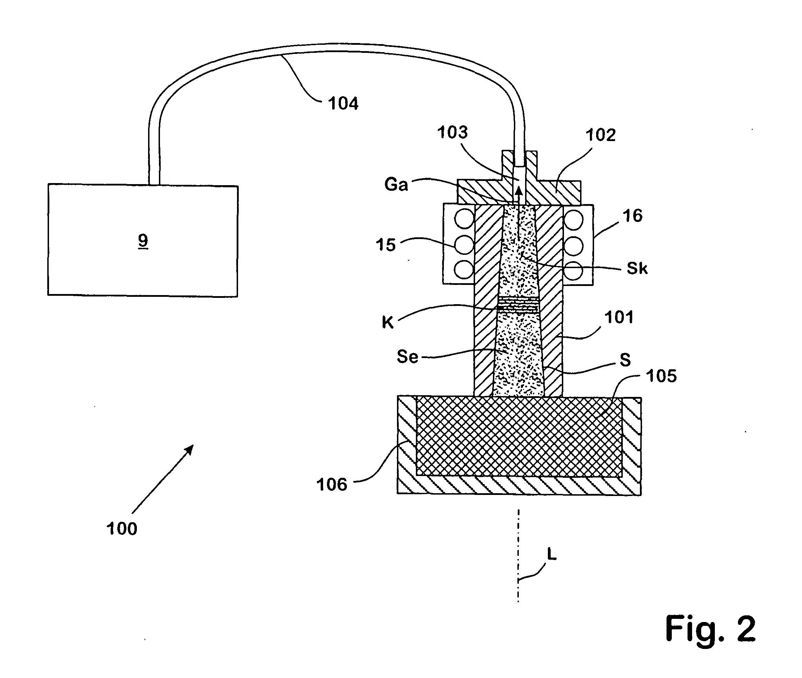

Bei der in Figur 2 dargestellten Vorrichtung 100 ist auf das Probengefäß 101 ein oberer, wie die Halter 2,3 geformter Halter 102 gesetzt, dessen Ausströmöffnung 103 über eine Verbindungsleitung 104 mit der Meßeinrichtung 9 verbunden ist. Das Probengefäß 101 ist dabei so ausgerichtet, daß die Spitze des kegelstumpförmigen Sandkerns S nach oben weist. Die Kühleinrichtung 16 ist in diesem Fall im oberen Drittel des Probengefäßes 101 angeordnet. Als Wärmequelle dient ein Schmelzenbad 105, welches in einem unterhalb des Probengefäßes 101 angeordneten Schmelzebehälter 106 gefüllt ist. Die Höhe des Spiegels des Schmelzenbades 105 ist dabei so eingestellt, daß die Schmelze die Sandkernprobe S an der in diesem Fall unten angeordneten, größeren stirnseitigen Öffnung des Probengefäßes 101 vollflächig benetzt wird.

Das Probengefäß 101 ist auf diese Weise bis auf die Ausströmöffnung 103 des Halters 102 vollständig abgeschlossen und wird von der vom Schmelzebad 105 abgegebenen Wärme in gleicher Weise erwärmt wie ein Gießkern beim Abgießen eines Gußstücks in einer Gießform.

Infolge der vom Schmelzebad 105 abgegebenen Wärme bildet sich im unteren Drittel der Sandprobe S eine Erwärmungszone Se aus, in der es zum Zersetzen des im Formsand enthaltenen Binders, Lösemittel, Katalysatorstoffen oder anderen Additiven und zum Verdampfen von im Formsand enthaltener Feuchtigkeit kommt. Der dabei entstehende Gas-/Dampfstrom steigt in der Sandkernprobe S auf und wird bei seinem Übergang in den durch die Kühleinrichtung 16 gekühlten Kühlabschnitt Sk der Sandkernprobe S soweit abgekühlt, daß es zur Entstehung und Ablagerung von Kondensat K in der Übergangszone zwischen dem Erwärmungs- Se und dem Kühlabschnitt Sk kommt. Das Gesamtvolumen des aus der Sandkernprobe S über die Versuchsdauer austretenden Gasstroms Ga sowie die zeitliche Veränderung des Gasstroms Ga werden von der Meßeinrichtung 9 erfaßt, so daß nach Beendigung des Versuchs ein Abbild der infolge der Zersetzung des Gießkerns und der Dampfbildung in der Praxis zu erwartenden, aus dem Gießkern austretenden Gasstroms zur Verfügung steht.

Nach Beendigung des Aufheizversuchs kann der Kern von der Schmelze abgenommen werden und seine noch vorhandene Gasdurchlässigkeit zum Vergleich mit der ursprünglichen Gasdurchlässigkeit bestimmt werden, indem aktiv ein Gasstrom durchgeleitet wird, bei dem entweder der Gasdruck konstant gehalten und die durchgehende Gasmenge pro Zeiteinheit bestimmt wird oder indem der Differenzdruck zwischen Gaseinspeisung und Gasauslaß ausgewertet wird.

Nach Beendigung des Versuchs wird zudem die Sankernprobe S aus dem Probengefäß 101 herausgenommen. Durch Sichtkontrolle kann dann die Lage der Zone bestimmt werden, in der sich Kondensat K in der Sandkernprobe S abgelagert hat. Diese Information ist hilfreich bei der Auslegung von in der Praxis eingesetzten Gießkernen.

### BEZUGSZEICHEN

- 1,100: Vorrichtungen zur Ermittlung der Gasdurchlässigkeit
- 2,3,102: Halter
- 4: Zuströmöffnung
- 5: Anschlußflansch
- 6,103: Ausströmöffnung
- 7: Anschlußflansch
- 8, 104: Verbindungsleitung
- 9: Meßeinrichtung
- 10,101: Probengefäß
- 11: Eintrittsöffnung
- 12: Austrittsöffnung
- 13: Heizleiter
- 14: Heizeinrichtung
- 15: Kühlschlangen
- 16: Kühleinrichtung
- 17: Isolierung
- 105: Aluminiumschmelzenbad
- 106: Schmelzenbehälter

- Ga,Ge: Gasströme
- K: Kondensatablagerungen
- L: Längsachse des Halters 2
- S: Sandkern
- Se: Erwärmungsabschnitt der Sandkernprobe S
- Sk: Kühlabschnitt der Sandkernprobe S
- Si: wärmeisolierter Abschnitt der Sandprobe S

## Patentansprüche

1. Verfahren zum Bestimmen des Gasdurchlässigkeitsvermögens von für das Vergießen von Metallschmelzen, insbesondere Leichtmetallen, bestimmten Kernen, die aus einem porösen Material, insbesondere Sand, hergestellt sind,
- bei dem eine Kernprobe (S) in einem Erwärmungsabschnitt (Se) auf eine Erwärmungstemperatur aufgeheizt wird,
- bei dem die Kernprobe (S) in einem anderen Kühlabschnitt (Sk) auf eine Kühltemperatur abgekühlt wird und
- bei dem der aus dem Kühlabschnitt (Sk) über ein bestimmtes Zeitintervall austretende Gas-/Dampfstrom (Ga) erfaßt wird.

2. Verfahren nach Anspruch 1, **dadurch gekennzeichnet, daß** ein unter einem bestimmten Eingangsdruck stehender Gasstrom (Ge) in den Erwärmungsabschnitt (Se) eingeleitet wird und der Ausgangsdruck des aus dem Kühlabschnitt (Sk) austretenden Gas-/Dampfstroms über ein bestimmtes Zeitintervall erfaßt wird.

3. Verfahren nach Anspruch 1, **dadurch gekennzeichnet, daß** die bei Erwärmung des Erwärmungsabschnitts (Se) infolge des Zerfalls des Kerns (S) entstehenden Gase volumenmäßig erfaßt werden.

4. Verfahren nach einem der voranstehenden Ansprüche, **dadurch gekennzeichnet, daß** zwischen dem Erwärmungs- (Se) und dem Kühlabschnitt (Sk) ein Isolationsabschnitt (Si) gegenüber der Einwirkung von von außen wirkender Wärme oder Kälte abgeschirmt wird.

5. Verfahren nach einem der voranstehenden Ansprüche, **dadurch gekennzeichnet, daß** als Wärmequelle für die Aufheizung des Erwärmungsabschnitts (Se) eine hinsichtlich der von ihr abgegebenen Wärmemenge steuerbare Heizeinrichtung (14) verwendet wird.

6. Verfahren nach einem der Ansprüche 1 bis 3, **dadurch gekennzeichnet, daß** als Wärmequelle für die Aufheizung des Erwärmungsabschnitts (Se) ein Schmelzenbad (105) verwendet wird.

7. Verfahren nach einem der voranstehenden Ansprüche, **dadurch gekennzeichnet, daß** die Kernprobe (S) eine längliche Form aufweist.

8. Verfahren nach Anspruch 7, **dadurch gekennzeichnet, daß** die Kernprobe (S) zylindrisch ausgebildet ist.

9. Verfahren nach Anspruch 7, **dadurch gekennzeichnet, daß** die Kernprobe (S) kegelstumpf- oder pyramidenstumpfförmig ausgebildet ist.

10. Verfahren nach einem der Ansprüche 7 bis 9, **dadurch gekennzeichnet, daß** der Erwärmungsabschnitt (Se) der einen Stirnseite und der Kühlabschnitt (Sk) der anderen Stirnseite der Kernprobe (S) zugeordnet sind.

11. Verfahren nach einem der Ansprüche 7 bis 10, **dadurch gekennzeichnet, daß** die Seitenflächen der Kernprobe (S) abgedichtet werden und daß der aus der dem Kühlabschnitt (Sk) zugeordneten Stirnfläche austretende Gas-/Dampfstrom (Ga) erfaßt wird.

12. Verfahren nach einem der voranstehenden Ansprüche, **dadurch gekennzeichnet, daß** die Kernprobe (S) in ein Probengefäß (10,101) eingeschossen wird, in dem sie während ihrer Untersuchung verbleibt.

13. Vorrichtung zur Durchführung eines gemäß einem der Ansprüche 1 bis 12 ausgebildeten Verfahrens,
- mit einem Probengefäß (10,101) für eine Kernprobe (S),
- mit einer Kühleinrichtung (14) zum Abkühlen eines Kühlabschnitts (Se) der in dem Probengefäß (10,101) jeweils enthaltenen Kernprobe (S),
- mit einer Wärmequelle zum Erwärmen eines Erwärmungsabschnitts (Se) der in dem Probengefäß (10,101) jeweils enthaltenen Kernprobe (S), und
- mit einer Meßeinrichtung (9) zum Erfassen eines aus dem Kühlabschnitt (Sk) austretenden Gas-/Dampfstroms (Ga).

14. Vorrichtung nach Anspruch 13, **dadurch gekennzeichnet, daß** die Wärmequelle eine hinsichtlich der von ihr abgegebenen Wärmemenge steuerbare Heizeinrichtung (14) ist.

15. Vorrichtung nach Anspruch 13, **dadurch gekennzeichnet, daß** die Wärmequelle einen für die Aufnahme von Metallschmelze bestimmten Schmelzenbehälter (106) umfaßt und daß der dem Erwärmungsabschnitt (Se) der Sandprobe (S) zugeordnete Bereich des Probengefäßes (10,101) thermisch an den Schmelzenbehälter (106) angekoppelt ist.

16. Vorrichtung nach Anspruch 15, **dadurch gekennzeichnet, daß** der Probenbehälter (10,101) zu einer im Schmelzenbehälter (106) enthaltenen Schmelze (105) derart geöffnet ist, daß der in ihm jeweils sitzende Kern (S) an mindestens einer seiner Außenflächen mit in der Schmelzenbehälter (106) enthaltener Schmelze (105) benetzt ist.

## Claims

1. A method for determining the gas permeability of cores intended for the casting of metal melts, particularly light metals, which are produced from a porous material, particularly sand,
- wherein a core sample (S) is heated to a heating temperature in a heating section (Se),
- the core sample (S) is cooled to a cooling temperature in another cooling section (Sk), and
- the gas/vapor flow (Ga) coming out of the cooling section (Sk) over a specific time interval is detected.

2. The method according Claim 1, **characterized in that** a gas flow (Ge) at a specific inlet pressure is conducted into the heating section (Se) and the outlet pressure of the gas/vapor flow coming out of the cooling section (Sk) is detected over a specific time interval.

3. The method according to Claim 1, **characterized in that** the volumes of the gases arising during heating of the heating section (Se) as a result of the decomposition of the core (S) are detected.

4. The method according to one of the preceding claims, **characterized in that** an insulation section (Si) is shielded from the effects of externally acting heat or cold between the heating section (Se) and the cooling section (Sk) .

5. The method according to one of the preceding claims, **characterized in that** a heating unit (14), which is controllable in regard to the quantity of heat it emits, is used as the heat source for heating the heating section (Se).

6. The method according to one of Claims 1 through 3, **characterized in that** a melt bath (105) is used as the heat source for heating the heating section (Se).

7. The method according to one of the preceding claims, **characterized in that** the core sample (S) has an oblong shape.

8. The method according to Claim 7, **characterized in that** the core sample (S) is implemented as cylindrical.

9. The method according to Claim 7, **characterized in that** the core sample (S) is implemented in the shape of a truncated cone or truncated pyramid.

10. The method according to one of Claims 7 through 9, **characterized in that** the heating section (Se) is assigned to one front face of the core sample (S) and the cooling section (Sk) is assigned to the other front face.

11. The method according to one of Claims 7 through 10, **characterized in that** the lateral faces of the core sample (S) are sealed and the gas/vapor flow (Ga) coming out of the front face assigned to the cooling section (Sk) is detected.

12. The method according to one of the preceding claims, **characterized in that** the core sample (S) is injected into a sample vessel (10, 101), in which it remains during its examination.

13. A device for performing a method implemented according to one of Claims 1 through 12,
- having a sample vessel (10, 101) for a core sample (S),
- having a cooling unit (14) for cooling a cooling section (Se) of the particular core sample (S) contained in the sample vessel (10, 101),
- having a heat source for heating a heating section (Se) of the particular core sample (S) contained in the sample vessel (10, 101), and
- having a measuring unit (9) for detecting a gas/vapor flow (Ga) coming out of the cooling section (Sk).

14. The device according to Claim 13, **characterized in that** the heat source is a heating unit (14), which is controllable in regard to the quantity of heat it emits.

15. The device according to Claim 13, **characterized in that** the heat source comprises a melt container (106) intended for receiving metal melts and the area of the sample vessel (10, 101) assigned to the heating section (Se) of the sand sample (S) is thermally coupled to the melt container (106).

16. The device according to Claim 15, **characterized in that** the sample container (10, 101) is open to a melt (105) contained in the melt container (106) in such a way that the particular core (S) seated therein is wetted on at least one of its external faces by the melt (105) contained in the melt container (106).

## Revendications

1. Procédé pour la détermination de la perméabilité du gaz pour couler des fontes de métaux, en particulier des métaux légers, des échantillons carottés, composés de matériaux poreux, plus précisément de sable,
- par lequel, un échantillon prélevé du noyau (S) est chauffé dans une section de chauffage (Se) jusqu'à atteindre une température de chauffage,
- par lequel, l'échantillon prélevé du noyau (S) est refroidit dans une section de refroidissement jusqu'à atteindre une température réfrigérée.
- par lequel, après une période définie, celui-ci acquiert un flux de vapeur/ gaz (Ga) en sortant de la section de refroidissement (Sk).

2. Procédé selon la revendication 1, **caractérisé en ce que**, sous une pression d'entrée déterminée, un flux de gaz vertical (Ge) est créé dans la section de chauffage (Se) et dans la pression de sortie, après une période définie, un flux de vapeur/ gaz est créé en sortant de la section de refroidissement (Sk).

3. Procédé selon la revendication 1, **caractérisé en ce que**, moyennant le chauffage de la section de chauffage (Se), à cause de la décomposition des noyaux (S), des gaz de volume moyen sont créés.

4. Procédé selon l'une quelconque des revendications précédentes, **caractérisé en ce que**, entre la section de chauffage (Se) et la section de refroidissement (Sk), une section d'isolation (Si) est créée afin de pallier l'effet nuisible de l'action de la chaleur et du froid.

5. Procédé selon l'une quelconque des revendications précédentes, **caractérisé en ce que**, en tant que source de chaleur pour le chauffage de la section de chauffage (Se), en ce qui concerne la quantité de chaleur dégagée, un dispositif de chauffage orientable (14) est utilisé.

6. Procédé selon les revendication 1 à 3, **caractérisé en ce que**, en tant que source de chaleur pour le chauffage de la section de chauffage (Se) un bain fondant (105) est utilisé.

7. Procédé selon l'une quelconque des revendications précédentes, **caractérisé en ce que**, l'échantillon prélevé du noyau (S) présente une forme oblongue.

8. Procédé selon la revendication 7, **caractérisé en ce que**, l'échantillon prélevé du noyau (S) a une forme cylindrique.

9. Procédé selon les revendications 7, **caractérisé en ce que**, l'échantillon prélevé du noyau (S) a une forme de tronc de cône ou de tronc de pyramide.

10. Procédé selon les revendications 7 à 9, **caractérisé en ce que**, la section de chauffage (Se) de la partie antérieure latérale et la section de refroidissement (Sk) de l'autre partie antérieure latérale sont disposées les unes par rapport aux autres.

11. Procédé selon les revendications 7 à 10, **caractérisé en ce que**, les surfaces latérales de l'échantillon prélevé du noyau (S) se ferment et **en ce que**, sur les parties antérieures latérales disposées, un flux de vapeur/gaz (Ga) est créé en sortant de la section de refroidissement (Sk).

12. Procédé selon l'une quelconque des revendications précédentes, **caractérisé en ce que**, l'échantillon prélevé du noyau (S) est sélectionné dans un conteneur d'échantillons (10, 101) pendant que son analyse continue.

13. Dispositif pour la réalisation du procédé décrit, selon l'une des revendications 1 à 12,
- avec un conteneur d'échantillons (10, 101) pour un échantillon prélevé du noyau (S),
- avec un dispositif de refroidissement (14) pour le refroidissement d'une section de refroidissement (Se) dont l'échantillon prélevé du noyau (S) est, à ce moment là, inclut dans le conteneur d'échantillons (10, 101),
- avec une source de chaleur pour le chauffage d'une section de chauffage (Se) dont l'échantillon prélevé du noyau (S) est, à ce moment là, inclut dans le conteneur d'échantillons (10, 101), et
- avec un dispositif de mesure (9) pour mesurer le flux de vapeur/gaz (Ga) sortant de la section de refroidissement (Sk).

14. Dispositif selon la revendication 13, **caractérisé en ce que**, la source de chaleur, en ce qui concerne la quantité de chaleur dégagée, consiste en un dispositif de chauffage orientable (14).

15. Dispositif selon la revendication 13, **caractérisé en ce que**, la source de chaleur comprend un conteneur de fontes (106) pour l'admission de fontes de métaux et **en ce que**, la section de chauffage (Se) de l'échantillon de sable (S) est thermiquement connectée à un conteneur de fontes (106) dans la zone disposée dans le conteneur d'échantillons (10, 101).

16. Dispositif selon la revendication 15, **caractérisé en ce que**, le conteneur d'échantillons (10, 101) est ainsi ouvert à des fontes contenues (105) dans le conteneur de fontes (106) et **en ce que**, respectivement, le noyau sédentaire (S) au moins l'une de ses surfaces extérieures, est mouillé avec la fonte contenue (105) dans le conteneur de fontes (106).
